# EUROPÄISCHE PATENTSCHRIFT

(11) **EP 2 976 814 B1**
(45) Veröffentlichungstag und Bekanntmachung des Hinweises auf die Patenterteilung: **15.03.2017**
(21) Anmeldenummer: 14709868.5
(22) Anmeldetag: 16.01.2014
(51) Int. Cl.: H01R 13/58

(54) **AUFSTECKWINKEL FÜR EINEN STECKVERBINDER**
CLIP-ON ELBOW FOR A PLUG CONNECTOR
ÉQUERRE D'ENFICHAGE POUR UN CONNECTEUR ENFICHABLE

(30) Priorität: 21.03.2013 DE 102013102886
(43) Veröffentlichungstag der Anmeldung: 27.01.2016
(73) Patentinhaber: HARTING Electronics GmbH, 32339 Espelkamp (DE)
(72) Erfinder: GLASKER, Nicolas, 49078 Osnabrück (DE); SCHMIDT, Hartmuth, 49179 Ostercappeln (DE); GRAFE, Andre, 49163 Bohmte (DE)
(74) Vertreter: Prinz & Partner mbB
(86) Internationale Anmeldenummer: PCT/DE2014/100010
(87) Internationale Veröffentlichungsnummer: WO 2014/146640

(56) Entgegenhaltungen:
- EP-A2- 1 139 503
- GB-A- 2 140 225
- US-A1- 2004 121 646
- US-A1- 2008 009 173

## Beschreibung

Die Erfindung betrifft einen Aufsteckwinkel für einen Kabelabgang eines Steckverbinders nach dem Oberbegriff des Anspruchs 1. Die Erfindung betrifft außerdem einen Steckverbinder, der zur Aufnahme eines solchen Aufsteckwinkels geeignet ist, nach Anspruch 11.

Aufsteckwinkel werden benötigt, um ein an einen Steckverbinder angeschlossenes Kabel in einer bestimmten Richtung vom Steckverbindergehäuse weg zu biegen und die Biegerichtung zu fixieren. Es ist beispielsweise bei Schaltschränken und/oder elektrischen Geräten sinnvoll alle angeschlossenen Kabel in dieselbe Richtung wegzuführen.

### Stand der Technik

Die DE 20 2007 008 980 U1 zeigt einen Steckverbinder, der ein separates Kabelabgangselement aufweist, dass auf den Gehäusekörper aufsteckbar ist. Innerhalb des Kabelabgangselements verläuft das am Steckverbinder angeschlossene Kabel. Das Kabelabgangselement ist gewinkelt ausgeführt, so dass das Kabel in einem bestimmten Winkel vom Steckverbindergehäuse - beziehungsweise von dessen Hauptsymmetrieachse - weggeneigt ist.

Das Kabelabgangselement ist geschlossen ausgeführt, weil innerhalb einzelne Leiter des mehradrigen Kabels, ohne schützenden Kabelmantel, verlaufen. Eine derartige Ausführung ist in ihrem Winkelbereich beschränkt. Es kann beispielsweise kein 90° Biegewinkel erreicht werden.

Ein weiterer Nachteil besteht darin, dass das Kabelabgangselement eine Zugentlastung für das angeschlossene Kabel umfassen muss. Dadurch vergrößert sich der Aufbau weiterhin. Diese Lösung ist unhandlich.

Die US 2004 012 16 46 A1 zeigt einen Aufsteckwinkel, der die Form einer gebogenen Rinne aufweist. Die US 2010 024 70 41 A1 zeigt eine vergleichbare Lösung. Solche Aufsteckwinkel können als so genannte Nachrüstlösung für einen Steckverbinder verwendet werden. Durch die halboffene Geometrie ist der zu realisierende Winkelbereich jedoch begrenzt.

Die WO 2012 136 702 A1 zeigt einen Aufsteckwinkel, der aus mehreren Teilen besteht. Die Herstellung eines solchen Aufsteckwinkels ist recht aufwendig und damit teuer. Auch hier ist der zu realisierende Winkelbereich begrenzt.

Die US 2008 / 0 009 173 A1 zeigt einen Aufsteckwinkel, der mittels Befestigungselementen am Kabelabgangselement befestigt und auf der Innenseite der Kabelbiegung angeordnet ist.

### Aufgabenstellung

Die Aufgabe der Erfindung besteht darin, einen Aufsteckwinkel für einen Steckverbinder vorzuschlagen, der kompakt ausgeführt ist und gleichzeitig einen großen Winkelbereich abdeckt.

Die Aufgabe wird durch die kennzeichnenden Merkmale des Anspruchs 1 gelöst.

Vorteilhafte Ausgestaltungen der Erfindung sind in den Unteransprüchen angegeben.

Ein Aufsteckwinkel wird in der Regel auf einen Kabelabgang eines Steckverbinders aufgesteckt, um das an den Steckverbinder angeschlossene Kabel in eine gewünschte Richtung von der Hauptsymmetrieachse des Steckverbinders weg zu biegen.

Der hier vorgeschlagene Aufsteckwinkel weist ein erstes Ende auf, das mit dem Kabelabgang in Berührkontakt bringbar ist. In der Regel wird das erste Ende auf den unteren Bereich des Kabelabgangs aufgesteckt.

Der Aufsteckwinkel weist ein zweites Ende auf, das ebenfalls mit dem Kabelabgang, aber in der Regel eher mit dem Kabelmantel des angeschlossenen Kabels in Berührkontakt bringbar ist. Die räumlich unterschiedlichen Koordinaten vom ersten und zweiten Ende bestimmen den so genannten Biegewinkel des an den Steckverbinder angeschlossenen Kabels.

Vorteilhafterweise sind die zum Kabelabgang ausgerichteten Flächen der Stege parallel zueinander ausgerichtet. Der Abstand der Stege ist nur leicht größer als der Durchmesser des Kabelabgangs, so dass der Kabelabgang eng zwischen den Stegen verlaufen kann.

Das zweite Ende des Aufsteckwinkels ist als Bogenelement ausgebildet. Dieses Bogenelement steht mit dem Kabelmantel des angeschlossenen Kabels in Berührkontakt und drückt dieses in die gewünschte Winkelstellung.

In einer bevorzugten Ausführungsform sind die zwei Stege gebogen ausgeführt. Die Biegung bei beiden Stegen ist gleich gewählt. Durch die gebogene Ausführung der Stege kann die oben erwähnte räumliche Lage vom ersten und zweiten Ende des Aufsteckwinkels und damit der Biegewinkel des Kabels bestimmt werden. Der Kabelabgang und gegebenenfalls auch ein teil des Kabels kann durch die Stege hindurchgesteckt werden. Dies ist nur bei einer erfindungsgemäßen offenen Form des Aufsteckwinkels möglich. Dadurch baut der Aufsteckwinkel bei einer relativ großen Biegung des Kabelabgangs, beispielsweise 90°, sehr gering auf.

Es wäre aber auch möglich, nicht gebogene Stege vorzusehen. Der Winkel, mit dem die Stege dann von der Ebene des ersten Endes abstehen, würde dann die räumliche Lage vom ersten und zweiten Ende des Aufsteckwinkels bestimmen.

Das erste Ende des Aufsteckwinkels ist im Wesentlichen als offenes Kreissegment ausgebildet, wobei die Öffnung im Kreissegment vorhanden ist, damit der Aufsteckwinkel auf den unteren Bereich des Kabelabgangs aufgeschoben werden kann. Dadurch ist der Aufsteckwinkel auch für fertig konfektionierte Steckverbinder geeignet und kann nachträglich aufgesetzt werden.

In einer besonders bevorzugten Ausführungsform ist innerhalb des Kreissegments eine regelmäßige oder symmetrische Vieleckstruktur angeformt. Der untere Bereich des Kabelabgangs weist eine dazu passende regelmäßige oder symmetrische Vieleckstruktur auf. Die Anzahl der sogenannten n-Ecken der Vieleckstrukturen von Aufsteckwinkel und Kabelabgang sind aufeinander abgestimmt. Durch die Vieleckstruktur kann der Aufsteckwinkel entlang der Umfangsrichtung des Kabelabgangs oder des Kabelmantels unterschiedlich positioniert werden, wodurch die Richtung in der das Kabel vom Steckverbinder weggebogen ist bestimmt werden kann. Der Aufsteckwinkel ist dadurch flexibel, beispielsweise bei Maschineninstallationen, einsetzbar.

Wie bereits oben geschildert sind das erste und zweite Ende des Aufsteckwinkels über zwei Stege miteinander verbunden. In diesem Fall hat der Aufsteckwinkel insgesamt eine offene, rahmenförmige Struktur. Er ist explizit nicht - wie in der DE 20 2007 008 980 U1 gezeigt - geschlossen ausgeführt. Auch eine halbgeschlossene Ausführung - beispielsweise in Form einer Rinne, wie in der US 2002/0122652 A1 gezeigt - ist explizit nicht geeignet. Die offene, rahmenförmige Struktur ermöglicht eine kompakte Bauweise des Aufsteckwinkels. Ein Wegbiegen des Kabels um ca. 90° ist nur mit einer offenen Struktur in einer derart kompakten Bauweise möglich. Dadurch kann der Aufsteckwinkel bei Anwendungen eingesetzt werden, die nicht viel Platz bieten.

Der Winkel, den die Hauptsymmetrieachse des Steckverbinders und die Kabelabgangsrichtung einschließen wird auch als Biegewinkel des an den Steckverbinder angeschlossenen Kabels bezeichnet. Bevorzugt liegt der Winkel zwischen 30° und 120°, besonders bevorzugt jedoch zwischen 45° und 90°.

Vorteilhafterweise weist der Aufsteckwinkel erste Befestigungsmittel auf, mit denen der Aufsteckwinkel verliersicher an dem Kabelabgang fixerbar ist. Es ist weiterhin vorteilhaft zweite Befestigungsmittel vorzusehen, mit denen der Aufsteckwinkel verliersicher an dem Kabel () fixerbar ist. Dadurch kann der Aufsteckwinkel nicht ungewollt abfallen und ist vibrationsfest, was im Maschinenbau durchaus sinnvoll ist. Bei den Befestigungsmitteln handelt es sich vorzugsweise um so genannte Kabelbinder. Diese sind in jeder Werkzeugkiste vorhanden und daher immer verfügbar.

In einer besonders bevorzugten Ausführungsform ist der Aufsteckwinkel aus Kunststoff, vorzugsweise aus einem kaltverformbaren Kunststoff gefertigt. Durch den kaltverformbaren Kunststoff kann die Biegung der oben erwähnten Stege nachträglich verändert werden. Dadurch wird die Lagerhaltung von derartigen Aufsteckwinkeln vereinfacht.

Es ist aber auch vorteilhaft den Aufsteckwinkel aus Metall zu fertigen. Bei einer Metallausführung können die Stege ebenfalls gebogen werden.

Eine Anordnung aus Steckverbinder und Aufsteckwinkel wird durch diese Patentanmeldung ebenfalls beansprucht. Einen erfindungsgemäßen Aufsteckwinkel bei optischen Steckverbindern einzusetzen ist besonders vorteilhaft. An den hier angeschlossenen Kabeln sind Lichtwellenleiter enthalten, die bekanntlich besonders empfindlich auf eine zu starke Biegung reagieren. Durch den erfindungsgemäßen Austeckwinkel wird eine zu hohe Biegebeanspruchung verhindert.

Der Kern der Erfindung bezieht sich auf einen Aufsteckwinkel für einen Kabelabgang eines Steckverbinders, wobei der Aufsteckwinkel ein erstes Ende aufweist, das mit einem Kabelabgang des Steckverbinders in Berührkontakt bringbar ist und wobei der Aufsteckwinkel ein zweites Ende aufweist, das mit dem Kabelabgang oder einem Kabelmantel des an den Steckverbinder angeschlossenen Kabels in Berührkontakt bringbar ist. Das erste Ende ist mit dem zweiten Ende über zwei einzelne zwei Stege miteinander verbunden, so dass der Kabelabgang und/oder das angeschlossene Kabel nur teilweise von den Stegen des Aufsteckwinkels abgedeckt ist. Dadurch kann der Aufsteckwinkel besonders klein gebaut und dennoch Biegewinkel des Kabels von ca. 90° erreicht werden.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines erfindungsgemäßen Aufsteckwinkels,
- Fig. 2: eine weitere perspektivische Darstellung des erfindungsgemäßen Aufsteckwinkels,
- Fig. 3: eine Seitenansicht des Aufsteckwinkels,
- Fig. 4: eine Draufsicht auf den Aufsteckwinkel,
- Fig. 5: eine perspektivische Darstellung eines optischen Steckverbinders,
- Fig. 6: eine perspektivische Ansicht des optischen Steckverbinders mit Aufsteckwinkel in der 90° Ausführung und
- Fig. 7: eine perspektivische Ansicht des optischen Steckverbinders mit Aufsteckwinkel in der 45° Ausführung.

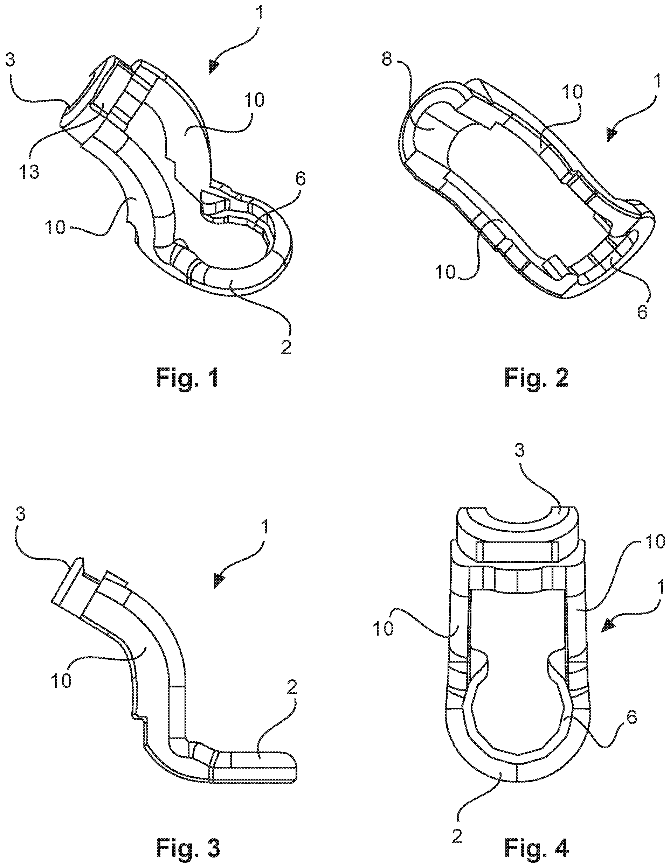

Die Figuren 1 bis 4 zeigen eine mögliche Ausführungsform des erfindungsgemäßen Aufsteckwinkels 1. Die Erfindung ist jedoch nicht auf diese spezielle Ausführungsform beschränkt.

Der Aufsteckwinkel 1 weist ein erstes Ende 2 auf, welches auf einen Kabelabgang 4 eines optischen Steckverbinders aufsteckbar ist. Das erste Ende ist im Wesentlichen als offenes Kreissegment geformt, welches innen eine regelmäßige Vieleckstruktur 6 aufweist.

Der Kabelabgang 4 des optischen Steckverbinders 5 weist im unteren Bereich ebenfalls eine regelmäßige Vieleckstruktur 7 auf, die zur Vieleckstruktur 6 des Aufsteckwinkels 1 passt. Dadurch kann der Aufsteckwinkel in verschiedenen Positionen entlang der Umfangsrichtung des Kabelabgangs 4 positioniert werden.

Der Aufsteckwinkel 1 weist ein zweites Ende 3 auf, welches im Wesentlichen bogenförmig ausgestaltet ist. Das Bogenelement 8 ist dazu ausgelegt, das Kabel 9 des Steckverbinders 5 in einen gewünschten Winkel von der Hauptsymmetrieachse H des Steckverbinders 5 wegzudrücken.

Das erste Ende 2 und das zweite Ende 3 des Aufsteckwinkels 1 sind über zwei Stege 10 miteinander verbunden. Im mittleren Bereich sind die Stege 10 gebogen. Man könnte auch sagen, dass die Stege 10 gekrümmt ausgeführt sind. Durch die Krümmung der Stege 10 wird auch der Winkel α bestimmt, den das Kabel von der Hauptsymmetrieachse H des Steckverbinders 5 weggeneigt ist.

Am zweiten Ende 3 des Aufsteckwinkels 1 ist eine Nut 13 vorgesehen, die zur Aufnahme eines Kabelbinders 11 vorgesehen ist.

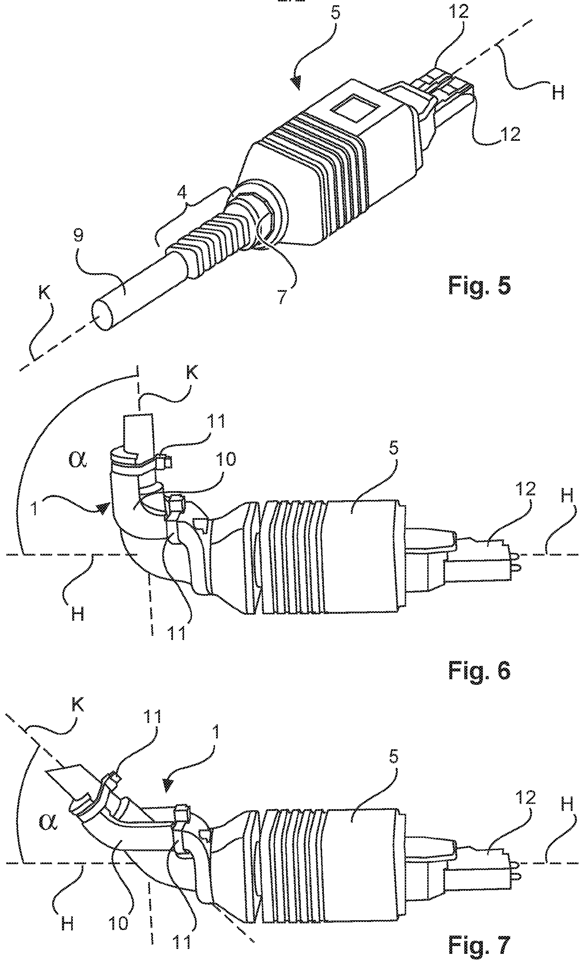

In Figur 5 ist ein optischer Steckverbinder 5 gezeigt, der mit einem Aufsteckwinkel 1 ausgestattet werden kann. Die dazu notwendige regelmäßige Vieleckstruktur 7, die sich im unteren Bereich des Kabelabgangs 4 befindet, wurde oben bereits angesprochen. Weiter oben ist der Kabelabgang spiralförmig ausgestaltet und dient als Biegeschutz. Ohne Aufsteckwinkel fluchten die Hauptsymmetrieachse H und die Kabelabgangsrichtung (Kabelabgangsachse) K miteinander. Das Kabel 9 ist nicht von der Hauptsymmetrieachse H weggebogen.

In den Figuren 6 und 7 ist ein optischer Steckverbinder 5 mit aufgestecktem Aufsteckwinkel 1 gezeigt. Der optische Steckverbinder 5 umfasst Träger 12 für so genannte Ferrulen, die einen Lichtwellenleiter zur Signalübertragung enthalten. Die Kabelabgangsrichtung K und die Hauptsymmetrieachse H des Steckverbinders 5 schließen einen Winkel α ein. In Figur 6 ist die Krümmung der Stege 10 größer als in Figur 7. In Figur 6 beträgt der Winkel α=90° und in Figur 7 ist α=45°.

Das erste Ende 2 des Aufsteckwinkels 1 ist über einen Kabelbinder 11 am unteren Teil des Kabelabgangs 4 des Steckverbinders 5 fixiert. Das zweite Ende 3 ist ebenfalls über einen Kabelbinder 11 am Kabelmantel des angeschlossenen Kabels 9 fixiert.

## Patentansprüche

1. Aufsteckwinkel für einen Kabelabgang eines Steckverbinders,
• dass der Aufsteckwinkel (1) ein erstes Ende (2) aufweist, das mit dem Kabelabgang (4) des Steckverbinders (5) in Berührkontakt bringbar ist und
• dass der Aufsteckwinkel (1) ein zweites Ende (3) aufweist, das mit dem Kabelabgang (4) oder einem Kabelmantel des an den Steckverbinder (5) angeschlossenen Kabels (9) in Berührkontakt bringbar ist,
dass der Aufsteckwinkel (1) eine offene, rahmenförmige Struktur aufweist.
**dadurch gekennzeichnet,**
• **dass** das zweite Ende (3) ein Bogenelement (8) aufweist, in welches der Kabelmantel des angeschlossenen Kabels (9) einlegbar ist und welches das Kabel (9) in eine Winkelstellung mit einem Winkel (α) drückt, wobei der Winkel (α) durch die Hauptsymmetrieachse (H) des Steckverbinders (5) und die Kabelabgangsrichtung (K) eingeschlossen wird und größer als 0° ist,
• **dass** das erste Ende (2) mit dem zweiten Ende (3) über zwei einzelne Stege(10) miteinander verbunden ist und

2. Aufsteckwinkel nach Anspruch 1
**dadurch gekennzeichnet, dass** die zwei Stege (10) gebogen ausgeführt sind.

3. Aufsteckwinkel nach einem der vorstehenden Ansprüche
**dadurch gekennzeichnet, dass**
das erste Ende (2) eine regelmäßige oder symmetrische Vieleckstruktur (6) aufweist.

4. Aufsteckwinkel nach einem der vorstehenden Ansprüche
**dadurch gekennzeichnet, dass**
ein Winkel (α), den die Hauptsymmetrieachse (H) des Steckverbinders (5) und die Kabelabgangsrichtung (K) einschließen, zwischen 30° und 120° liegt.

5. Aufsteckwinkel nach einem der vorstehenden Ansprüche
**dadurch gekennzeichnet, dass**
der Winkel (α), den die Hauptsymmetrieachse (H) des Steckverbinders (5) und die Kabelabgangsrichtung (K) einschließen, zwischen 45° und 90° liegt.

6. Aufsteckwinkel nach einem der vorstehenden Ansprüche
**dadurch gekennzeichnet, dass**
der Aufsteckwinkel (1) erste Befestigungsmittel (11) aufweist, mit denen der Aufsteckwinkel (1) verliersicher an dem Kabelabgang (4) fixerbar ist.

7. Aufsteckwinkel nach einem der vorstehenden Ansprüche
**dadurch gekennzeichnet, dass**
der Aufsteckwinkel (1) zweite Befestigungsmittel (11) aufweist, mit denen der Aufsteckwinkel (1) verliersicher an dem Kabel (9) fixerbar ist.

8. Aufsteckwinkel nach einem der vorstehenden Ansprüche
**dadurch gekennzeichnet, dass**
der Aufsteckwinkel aus Kunststoff, vorzugsweise aus einem kaltverformbaren Kunststoff gefertigt ist.

9. Aufsteckwinkel nach einem der Ansprüche 1 bis 7
**dadurch gekennzeichnet, dass**
der Aufsteckwinkel (1) aus Metall gefertigt ist.

10. Steckverbinder mit einem Aufsteckwinkel gemäß Anspruch 1.

11. Steckverbinder nach vorstehendem Anspruch
**dadurch gekennzeichnet,**
**dass** der Steckverbinder einen Kabelabgang (4) mit integrierter Kabelzugentlastung aufweist und
**dass** der Kabelabgang (4) eine regelmäßige oder symmetrische Vieleckstruktur (7) aufweist.

12. Steckverbinder nach einem der beiden vorstehenden Ansprüche
**dadurch gekennzeichnet, dass**
es sich beim Steckverbinder (5) um einen optischen Steckverbinder handelt.

## Claims

1. A clip-on bracket for a cable outlet of a plug-in connector,
• wherein the clip-on bracket (1) has a first end (2) that can be brought into touching contact with the cable outlet (4) of the plug-in connector (5), and
• wherein the clip-on bracket (1) has a second end (3) that can be brought into touching contact with the cable outlet (4) or with a cable sheath of the cable (9) connected to the plug-in connector (5),
• wherein the clip-on bracket (1) has an open, frame-shaped structure,
**characterised in that**
• the second end (3) has an arc element (8) into which the cable sheath of the connected cable (9) can be inserted and which pushes the cable (9) into an angular position at an angle (α), the angle (α) being included by the main axis of symmetry (H) of the plug-in connector (5) and the cable outlet direction (K) and being greater than 0°,
• the first end (2) is connected to the second end (3) via two individual webs (10).

2. The clip-on bracket according to claim 1,
**characterised in that**
the two webs (10) have a bent configuration.

3. The clip-on bracket according to either of the preceding claims,
**characterised in that**
the first end (2) has a regular or symmetrical polygon structure (6).

4. The clip-on bracket according to any of the preceding claims,
**characterised in that**
an angle (α) that is included by the main axis of symmetry (H) of the plug-in connector (5) and the cable outlet direction (K) is between 30° and 120°.

5. The clip-on bracket according to any of the preceding claims,
**characterised in that**
the angle (α) that is included by the main axis of symmetry (H) of the plug-in connector (5) and the cable outlet direction (K) is between 45° and 90°.

6. The clip-on bracket according to any of the preceding claims,
**characterised in that**
the clip-on bracket (1) has first fastening means (11) by means of which the clip-on bracket (1) can be captively fixed to the cable outlet (4).

7. The clip-on bracket according to any of the preceding claims,
**characterised in that**
the clip-on bracket (1) has second fastening means (11) by means of which the clip-on bracket (1) can be captively fixed to the cable (9).

8. The clip-on bracket according to any of the preceding claims,
**characterised in that**
the clip-on bracket is made from plastics, preferably from a cold-formable plastic.

9. The clip-on bracket according to any of claims 1 to 7,
**characterised in that**
the clip-on bracket (1) is made from metal.

10. A plug-in connector comprising a clip-on bracket according to claim 1.

11. The plug-in connector according to the preceding claim,
**characterised in that**
the plug-in connector includes a cable outlet (4) with an integrated cable strain relief, and
the cable outlet (4) has a regular or symmetric polygon structure (7).

12. The plug-in connector according to either of the two preceding claims,
**characterised in that**
the plug-in connector (5) is an optical plug-in connector.

## Revendications

1. Equerre à emboîtement pour un départ de câble d'un connecteur à fiches,
• l'équerre à emboîtement (1) présentant une première extrémité (2) qui est apte à être amenée en contact à effleurement avec le départ de câble (4) du connecteur à fiches (5), et
• l'équerre d'emboîtement (1) présentant une deuxième extrémité (3) qui est apte à être amenée en contact à effleurement avec le départ de câble (4) ou une gaine de câble du câble (9) relié au connecteur à fiches (5),
• l'équerre d'emboîtement (1) présentant une structure ouverte en forme de cadre,
**caractérisée en ce que**
• la deuxième extrémité (3) présente un élément en arc (8) dans lequel la gaine de câble du câble (9) relié peut être insérée et qui pousse le câble (9) dans une position angulaire d'un angle (α), l'angle (α) étant renfermé par l'axe de symétrie principal (H) du connecteur à fiches (5) et le sens de départ de câble (K) et étant supérieur à 0°,
• la première extrémité (2) est reliée à la deuxième extrémité (3) par deux barrettes (10) individuelles.

2. Equerre à emboîtement selon la revendication 1,
**caractérisée en ce que**
les deux barrettes (10) sont réalisées de manière courbe.

3. Equerre à emboîtement selon l'une des revendications précédentes,
**caractérisée en ce que**
la première extrémité (2) présente une structure polygonale (6) régulière ou symétrique.

4. Equerre à emboîtement selon l'une des revendications précédentes,
**caractérisée en ce que**
un angle (α) renfermé par l'axe de symétrie principal (H) du connecteur à fiches (5) et le sens de départ de câble (K) est compris entre 30° et 120°.

5. Equerre à emboîtement selon l'une des revendications précédentes,
**caractérisée en ce que**
l'angle (α) renfermé par l'axe de symétrie principal (H) du connecteur à fiches (5) et le sens de départ de câble (K) est compris entre 45° et 90°.

6. Equerre à emboîtement selon l'une des revendications précédentes,
**caractérisée en ce que**
l'équerre à emboîtement (1) présente des premiers moyens de fixation (11) au moyen desquels l'équerre à emboîtement (1) est apte à être fixée de manière imperdable au départ de câble (4).

7. Equerre à emboîtement selon l'une des revendications précédentes,
**caractérisée en ce que**
l'équerre à emboîtement (1) présente des deuxièmes moyens de fixation (11) au moyen desquels l'équerre à emboîtement (1) est apte à être fixée de manière imperdable au câble (9).

8. Equerre à emboîtement selon l'une des revendications précédentes,
**caractérisée en ce que**
l'équerre à emboîtement est réalisée en matière plastique, de préférence en une matière plastique formable à froid.

9. Equerre à emboîtement selon l'une des revendications 1 à 7,
**caractérisée en ce que**
l'équerre à emboîtement (1) est réalisée en métal.

10. Connecteur à fiches comportant une équerre à emboîtement selon la revendication 1.

11. Connecteur à fiches selon la revendication précédente,
**caractérisé en ce que**
le connecteur à fiches présente un départ de câble (4) à décharge de traction de câble intégré, et
**en ce que** le départ de câble (4) présente une structure polygonale (7) régulière ou symétrique.

12. Connecteur à fiches selon l'une des deux revendications précédentes,
**caractérisé en ce que**
le connecteur à fiches (5) est un connecteur à fiches optique.
